(19) Europäisches Patentamt

European Patent Office

Office européen des brevets

(11) **EP 3 451 054 B1**

(12) **FASCICULE DE BREVET EUROPEEN**

(45) Date de publication et mention de la délivrance du brevet:
**27.05.2020 Bulletin 2020/22**

(51) Int Cl.:
*G02F 1/29* *(2006.01)*    *G02F 1/313* *(2006.01)*
*G02F 1/295* *(2006.01)*

(21) Numéro de dépôt: **18191592.7**

(22) Date de dépôt: **30.08.2018**

(54) **MATRICE DE PHASES OPTIQUES À ADRESSAGE SIMPLIFIÉ**

MATRIX VON OPTISCHEN PHASEN MIT VEREINFACHTER ADRESSIERUNG

OPTICAL PHASE MATRIX WITH SIMPLIFIED ADDRESSING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2017 FR 1758017**

(43) Date de publication de la demande:
**06.03.2019 Bulletin 2019/10**

(73) Titulaire: **Commissariat à l'énergie atomique et aux énergies alternatives**
**75015 Paris (FR)**

(72) Inventeurs:
• **HASSAN, Karim**
  **89470 MONETEAU (FR)**
• **BOUTAMI, Salim**
  **38100 GRENOBLE (FR)**
• **KOPP, Christophe**
  **38120 FONTANIL-CORNILLON (FR)**

(74) Mandataire: **Brevalex**
**56, Boulevard de l'Embouchure**
**B.P. 27519**
**31075 Toulouse Cedex 2 (FR)**

(56) Documents cités:
• **DAVID N. HUTCHISON ET AL: "High-resolution aliasing-free optical beam steering", OPTICA, vol. 3, no. 8, 5 août 2016 (2016-08-05), page 887, XP055475668, DOI: 10.1364/OPTICA.3.000887**
• **TIN KOMLJENOVIC ET AL: "Sparse aperiodic arrays for optical beam forming and LIDAR", OPTICS EXPRESS, vol. 25, no. 3, 31 janvier 2017 (2017-01-31), page 2511, XP055475693, DOI: 10.1364/OE.25.002511**
• **KWONG DAVID N ET AL: "Integrated optical phased array based large angle beam steering system fabricated on silicon-on-insulator", SILICON PHOTONICS VI, SPIE, 1000 20TH ST. BELLINGHAM WA 98225-6705 USA, vol. 7943, no. 1, 10 février 2011 (2011-02-10), pages 1-6, XP060020684, DOI: 10.1117/12.875491**
• **AMI YAACOBI ET AL: "Integrated phased array for wide-angle beam steering", OPTICS LETTERS, OPTICAL SOCIETY OF AMERICA, vol. 39, no. 15, 1 août 2014 (2014-08-01), pages 4575-4578, XP001590671, ISSN: 0146-9592, DOI: 10.1364/OL.39.004575 [extrait le 2014-07-30]**
• **GABRIELLI LUCAS H ET AL: "Aperiodic Antenna Array for Secondary Lobe Suppression", IEEE PHOTONICS TECHNOLOGY LETTERS, IEEE SERVICE CENTER, PISCATAWAY, NJ, US, vol. 28, no. 2, 15 janvier 2016 (2016-01-15), pages 209-212, XP011594492, ISSN: 1041-1135, DOI: 10.1109/LPT.2015.2492419 [extrait le 2015-12-10]**

**Description**

**DOMAINE TECHNIQUE**

L'invention concerne un dispositif d'émission de front d'onde électromagnétique, comportant une pluralité de sources lumineuses élémentaires, et des éléments de déphasage pour piloter des décalages relatifs de la phase optique des faisceaux lumineux émis par lesdites sources élémentaires.

Les sources élémentaires forment ensemble, en champ lointain et par des phénomènes d'interférences constructives et destructives, une répartition prédéterminée du champ électromagnétique. Elles peuvent en particulier constituer une source globale émettant un faisceau principal d'émission, défini en champ lointain, et dont on peut piloter l'orientation dans l'espace à l'aide desdits éléments de déphasage.

Un tel dispositif d'émission est couramment nommé « matrice de phases optiques ».

**ÉTAT DE LA TECHNIQUE ANTÉRIEURE**

Le document « High-resolution aliasing-free optical beam steering », David N. Hutchison & al., Optica, Vol. 3, No. 8, août 2016, pages 887-890, décrit un dispositif d'émission d'un front d'onde électromagnétique, comportant un laser accordable dont la puissance optique est répartie sur une pluralité de guides d'onde d'émission.

Chaque guide d'onde d'émission présente une portion amont, recevant un élément de déphasage, et une portion avale rectiligne, recevant un réseau d'extraction de puissance optique. Les réseaux d'extraction des différents guides d'onde d'émission forment donc des sources élémentaires dont on peut piloter les déphasages optiques relatifs.

Les portions rectilignes des différents guides d'onde d'émission sont alignées côté à côte, parallèles entre elles.

En champ lointain, la puissance optique émise par ce dispositif est concentrée vers une direction privilégiée, dont l'orientation est définie par deux angles $\psi$ et $\theta$.

Dans tout le texte, la direction privilégiée de concentration de la puissance optique, en champ lointain, est nommée «direction principale d'émission ».

L'angle $\psi$ est piloté grâce aux éléments de déphasage.

L'angle $\theta$ est piloté en faisant varier la longueur d'onde du signal fourni par le laser accordable. La plage de longueur d'onde pouvant être balayée par le laser accordable s'étend de 1260 nm à 1360 nm. Cela correspond à une amplitude de balayage de l'angle $\theta$ de seulement 17°.

Dans l'article « Large-scale nanophotonic phased array », Nature, Vol. 493, 10 janvier 2013, pages 195 à 199, les auteurs, Jie Sun & al.*,* décrivent une solution permettant de s'affranchir de cette limitation sur l'angle $\theta$.

Ils décrivent en particulier un dispositif d'émission comportant une source laser dont la puissance optique est répartie sur une matrice de 64 x 64 nano-antennes en silicium, réparties en lignes et colonnes, selon un maillage carré.

Chaque nano-antenne forme une source élémentaire, et comporte une portion chauffante formant un élément de déphasage.

En champ lointain, la puissance optique émise par ce dispositif peut être concentrée vers une direction principale d'émission, dont l'orientation est définie par deux angles. La valeur prise par chacun de ces deux angles est pilotée de la même façon, à l'aide des éléments de déphasage.

On s'affranchit ainsi de la limitation décrite ci-dessus, relative à une amplitude de balayage.

En revanche, les mesures reportées dans l'article montrent l'existence d'un phénomène de réplication de faisceau, se traduisant par la présence de faisceaux secondaires, d'intensité moindre, autour d'un faisceau principal orienté selon la direction principale d'émission.

Dans la plupart des cas, et notamment dans des applications à la télédétection, ces faisceaux secondaires ne sont pas souhaitables.

Un objectif de la présente invention est donc de proposer un dispositif d'émission d'un front d'onde électromagnétique, de type matrice de phases optiques, pouvant offrir à la fois :

- une large plage de balayage dans l'espace d'une direction principale d'émission ; et
- une émission sans phénomène de réplication de faisceau.

**EXPOSÉ DE L'INVENTION**

Cet objectif est atteint avec un dispositif d'émission d'un front d'onde électromagnétique prévu pour, en utilisation, être connecté à une source lumineuse émettant un faisceau lumineux, et comprenant :

- au moins trois guides d'onde d'émission, comportant chacun un tronçon rectiligne qui reçoit un ou plusieurs élément(s) d'extraction de puissance optique, dit(s) élément(s) d'extraction ; et

- en amont de chacun desdits tronçons rectilignes, un élément respectif de déphasage ; et
- en amont de chacun desdits éléments de déphasage, un coupleur optique respectif, chaque coupleur optique présentant un taux de couplage ajustable ;

au moins deux desdits tronçons rectilignes s'étendant selon des droites qui ne sont pas parallèles entre elles.

Lesdits droites peuvent être sécantes, lorsque les guides d'onde d'émission correspondants s'étendent sur un même plan.

Dans tout le texte, le terme « amont » se réfère au sens de propagation, dans le dispositif d'émission selon l'invention, de la lumière émise par ladite source lumineuse.

Chaque coupleur optique et chaque élément de déphasage se trouvent donc du côté de l'extrémité d'entrée de l'un des tronçons rectilignes.

Chaque élément d'extraction de puissance optique forme une source élémentaire, adaptée à émettre un faisceau lumineux, dont la phase est ajustable à l'aide de l'élément de déphasage situé en amont du tronçon rectiligne correspondant. L'ajustement de la phase correspond ici à l'ajustement d'un déphasage relativement à une phase optique d'origine. La phase optique d'origine est celle du faisceau lumineux émis par la source lumineuse qui, en utilisation, est connectée au dispositif d'émission selon l'invention. La phase optique après déphasage est la phase optique du faisceau émergeant de l'élément de déphasage, dans le tronçon rectiligne associé, et arrivant sur le premier élément d'extraction de puissance optique le long dudit tronçon.

Chaque source élémentaire n'émet un faisceau lumineux que lorsqu'un signal lumineux entre dans le tronçon rectiligne correspondant.

Les coupleurs optiques, présentant chacun un taux de couplage ajustable, permettent de sélectionner au moins deux tronçons rectilignes qui vont recevoir en entrée un signal lumineux.

Les tronçons rectilignes ainsi sélectionnés définissent ensemble l'orientation d'un plan d'extraction.

Le plan d'extraction est un plan recevant l'ensemble des directions principales d'émission, accessibles à l'aide des tronçons rectilignes sélectionnés.

Il est sensiblement orthogonal à la direction moyenne de ces tronçons rectilignes.

L'orientation, dans le plan d'extraction, de la direction principale d'émission, est ensuite fonction des déphasages relatifs des faisceaux lumineux émis par les sources élémentaires associées aux tronçons rectilignes sélectionnés.

Selon l'invention, le dispositif d'émission comporte au moins trois guides d'onde d'émission présentant chacun un tronçon rectiligne, et au moins deux desdits tronçons rectilignes s'étendent selon des droites non parallèles entre elles.

On peut donc sélectionner au moins deux couples de tronçons rectilignes, définissant ensemble deux orientations différentes du plan d'extraction.

L'invention offre donc une solution originale pour piloter la direction principale d'émission d'une matrice de phases optiques, basée sur un adressage en une dimension d'une série de tronçons rectilignes de guides d'onde, et sur un agencement original de ces tronçons rectilignes.

Les paramètres permettant de définir l'orientation dans l'espace de la direction principale d'émission sont des déphasages optiques, et des orientations de tronçons rectilignes de guides d'onde.

On peut ainsi accéder à une multitude d'orientations différentes de la direction principale d'émission, ces orientations étant réparties dans une pluralité de plans de l'espace à trois dimensions. En particulier, ces orientations peuvent être réparties sur une pluralité de plans inclinés les uns relativement aux autres, et répartis sur une plage angulaire de largeur bien supérieure à 17°, par exemple supérieure à 90°, et pouvant atteindre par exemple 180°.

En outre, l'adressage selon une seule dimension, avec les éléments de déphasage en amont des tronçons rectilignes, permet de rapprocher les uns des autres les éléments d'extractions.

Cette caractéristique permet de limiter, et même de supprimer, des phénomènes de réplication de faisceau.

Cet effet est particulièrement avantageux dans le cadre d'une utilisation du dispositif selon l'invention, comme émetteur d'un dispositif de télédétection par laser (LIDAR, en anglais, pour « *light detection and ranging* »), et plus particulièrement encore pour détecter à distance la présence d'un objet, et mesurer sa position. Dans une telle utilisation, le dispositif selon l'invention est utilisé pour réaliser un balayage en trois dimensions d'un faisceau de lumière pulsé, et un ensemble de détection reçoit un signal retour provenant de la réflexion de ce faisceau sur un objet cible.

La réplication de faisceau correspond à la présence de faisceaux secondaires, autour d'un faisceau principal. Ces faisceaux secondaires peuvent être renvoyés par d'autres objets que l'objet cible, et ainsi fausser ou au moins complexifier la reconstruction numérique d'une scène en trois dimensions. En outre, ces faisceaux secondaires reçoivent une partie de la puissance optique totale émise par le dispositif d'émission, diminuant d'autant la puissance optique du faisceau principal, et par conséquent une distance maximale de détection d'un objet.

Il est donc particulièrement avantageux de limiter les phénomènes de réplication de faisceau, lorsque le dispositif d'émission selon l'invention est utilisé en télédétection.

L'adressage selon une seule dimension, avec les éléments de déphasage en amont des tronçons rectilignes, permet également de recourir à des matériaux autres que le silicium pour réaliser les guides d'onde d'émission avec leurs éléments de déphasage, sans que cela se traduise par l'apparition ou l'augmentation de phénomènes de réplication de faisceau. On détaillera dans la suite l'exemple particulièrement avantageux du nitrure de silicium.

Selon l'invention, un coupleur optique présentant un taux de couplage ajustable peut désigner simplement un coupleur pouvant coupler ou ne pas coupler la lumière. Un tel coupleur optique forme alors un simple commutateur optique.

De manière avantageuse, le dispositif d'émission selon l'invention comporte en outre un guide d'onde d'injection, le long duquel sont répartis les coupleurs optiques, chaque coupleur optique étant situé entre le guide d'onde d'injection et l'un des éléments de déphasage.

De préférence, chaque tronçon rectiligne comporte une pluralité d'éléments d'extraction, répartis le long dudit tronçon rectiligne selon un pas régulier.

Ledit pas régulier peut être le même, sur chacun desdits tronçons rectilignes.

Chaque tronçon rectiligne peut comporter une pluralité d'éléments d'extraction, présentant différents taux d'extraction, et agencés le long dudit tronçon par ordre croissant de ce taux d'extraction, depuis une extrémité d'entrée dudit tronçon, du côté de l'élément correspondant de déphasage.

Chaque tronçon rectiligne comporte avantageusement une pluralité d'éléments d'extraction, et les éléments d'extraction sont répartis le long d'une série de motifs, les différents motifs étant des homothéties les uns des autres, et à chaque motif correspondant un élément d'extraction de chacun desdits tronçons.

De préférence, chaque tronçon rectiligne comporte une pluralité d'éléments d'extraction, chacun desdits éléments d'extraction est un réseau d'extraction, et les réseaux d'extraction d'un même tronçon rectiligne sont orientés selon la même direction et ont la même période.

De façon avantageuse, lesdits tronçons rectilignes sont tous orientés vers une même zone, dite zone de cœur, située, pour chaque tronçon rectiligne, du côté opposé à l'élément correspondant de déphasage.

En particulier, lesdits tronçons rectilignes peuvent être orientés selon des rayons d'un même cercle ou d'un même cylindre.

Lesdits tronçons rectilignes peuvent être agencés selon un pas de répartition angulaire régulier.

Ils peuvent être répartis sur 360° d'angle ou sur un angle compris entre 160° et 200°.

De préférence, les éléments d'extraction des différents tronçons rectilignes sont répartis le long d'une série de cercles concentriques ou de cylindres concentriques, à chaque cercle, ou cylindre, correspondant un élément d'extraction de chacun desdits tronçons.

Les guides d'onde d'émission comprennent avantageusement du nitrure de silicium.

L'invention concerne également un procédé d'utilisation d'un dispositif d'émission selon l'invention, dans lequel chaque coupleur optique comprend un anneau de couplage et chaque élément de déphasage comporte un tronçon d'un guide d'onde d'émission, dit tronçon de déphasage, le procédé comportant :

- une étape d'ajustement du taux de couplage respectif de chacun des coupleurs optiques, par ajustement de l'intensité d'une tension ou d'un courant électrique, fournissant un chauffage par effet Joule, à l'anneau de couplage correspondant ; et
- une étape d'ajustement d'un déphasage respectif apporté par chacun des éléments de déphasage associés aux coupleurs optiques dont le taux de couplage dépasse un seuil prédéterminé, par ajustement de l'intensité d'une tension ou d'un courant électrique fournissant un chauffage, par effet Joule, au tronçon de déphasage correspondant.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- les figures 1A et 1B illustrent respectivement une répartition des sources élémentaires dans un dispositif d'émission selon l'art antérieur, et une répartition de la puissance optique obtenue en champ lointain à l'aide d'un tel dispositif ;
- la figure 2 illustre de façon schématique, selon une vue de dessus, un premier mode de réalisation d'un dispositif d'émission de front d'onde selon l'invention ;
- les figures 3A et 3B illustrent de façon schématique, respectivement selon une vue de dessus et selon une vue en perspective, le dispositif d'émission de la figure 2 avec une direction principale d'émission associée ;
- les figures 4A à 4D, illustrent le balayage de la direction principale d'émission dans un premier plan d'extraction, à l'aide d'un dispositif d'émission selon l'invention ;
- les figures 5A à 5D, illustrent le balayage de la direction principale d'émission dans un deuxième plan d'extraction, à l'aide d'un dispositif d'émission selon l'invention ;
- la figure 6 illustre de façon schématique, selon une vue de dessus, un deuxième mode de réalisation d'un dispositif d'émission selon l'invention ;

- la figure 7 illustre de façon schématique, selon une vue de dessus, un troisième mode de réalisation d'un dispositif d'émission selon l'invention ; et
- la figure 8 illustre de façon très schématique, selon une vue en perspective, un quatrième mode de réalisation d'un dispositif d'émission selon l'invention.

## EXPOSÉ DÉTAILLÉ DE MODES DE RÉALISATION PARTICULIERS

On illustre tout d'abord une analyse de la répartition de puissance optique en champ lointain, dans un dispositif d'émission.

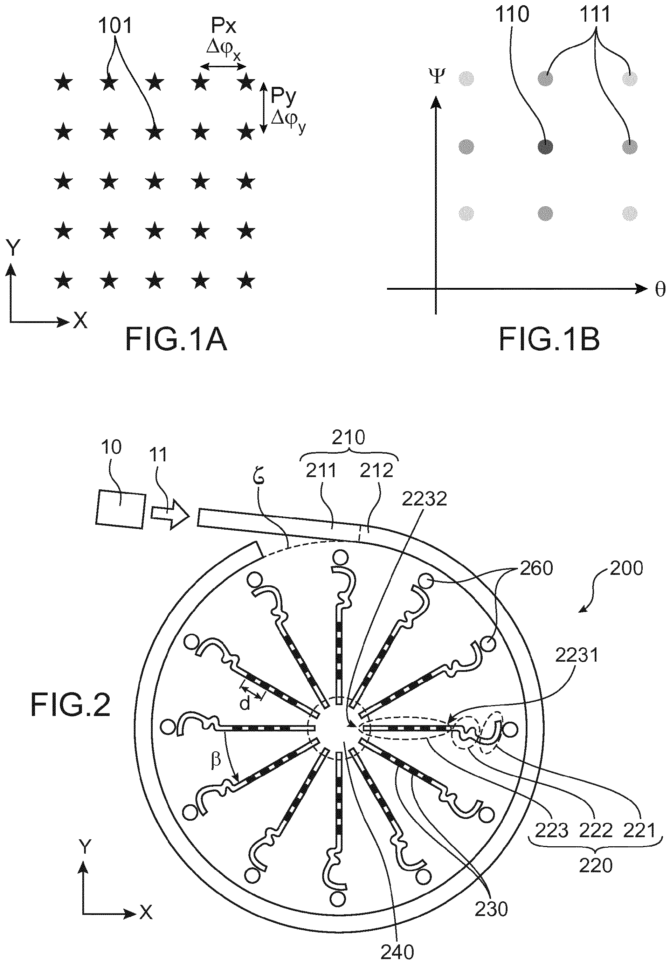

A la figure 1A, on a représenté de façon schématique la répartition des sources élémentaires 101 d'un dispositif d'émission tel que présenté en introduction, comportant une matrice de sources élémentaires 101 réparties en lignes et colonnes.

Les sources élémentaires 101 sont réparties selon les axes (OX) et (OY), selon un pas de répartition $P_X$, respectivement $P_Y$. Le déphasage relatif entre deux sources élémentaires voisines, alignées selon (OX), vaut $\Delta\varphi_x$. Le déphasage relatif entre deux sources élémentaires voisines, alignées selon (OY),vaut $\Delta\varphi_y$. Les axes (OY) et (OX) appartiennent à un repère orthonormé (OXYZ).

A la figure 1B, on a représenté de façon schématique une répartition de la puissance optique en champ lointain, obtenue à l'aide d'un tel dispositif. La puissance est répartie ici sur un faisceau principal 110, et sur une pluralité de faisceaux secondaires 111. L'orientation de ces faisceaux est définie par deux angles $\theta$ et $\psi$. Les angles $\theta$ et $\psi$ correspondent respectivement à un angle de déviation dans le plan (OXZ) et dans le plan (OYZ).

En s'intéressant à cette répartition de puissance optique, les inventeurs ont réalisé que les orientations pouvant recevoir de la puissance optique sont définies par des angles $(\theta_m;\psi_n)$ tels que :

$$\sin(\theta_m) = \frac{\Delta\varphi_x + m*2\pi}{k_0*P_X} \qquad (1)$$

$$\sin(\psi_n) = \frac{\Delta\varphi_y + n*2\pi}{k_0*P_Y} \qquad (2)$$

avec $k_0 = \dfrac{2\pi}{\lambda}$, $\lambda$ la longueur d'onde émise par les sources élémentaires, et $m$ et $n$ des entiers relatifs.

En outre, les orientations possibles sont celles associées aux valeurs de $m$ et de $n$ telles que :

$$sin^2(\theta_m) + sin^2(\psi_n) \leq 1 \qquad (3)$$

Par conséquent, le nombre d'orientations pouvant recevoir de la puissance optique diminue lorsque les valeurs de $P_X$ et $P_Y$ diminuent. En outre, ces orientations s'éloignent les unes des autres lorsque les valeurs de $P_X$ et $P_Y$ diminuent.

En d'autres termes, le pas de répartition des sources élémentaires détermine l'existence, ou non, de phénomènes de réplication de faisceau.

Les inventeurs ont ainsi montré qu'un moyen pour éviter ou limiter la réplication de faisceau consiste à rapprocher les sources élémentaires les unes des autres.

A une longueur d'onde $\lambda_p$ = 1,55 $\mu$m, le pas de répartition des sources élémentaires doit être inférieur ou égal à 1,55 $\mu$m pour éviter la réplication de faisceau, ce qui n'est pas possible du fait de l'encombrement des éléments de déphasage sur chaque nano-antenne. Même un pas de 3 $\mu$m, permettant une bonne réduction du nombre de réplications, n'est pas atteignable du fait de l'encombrement des éléments de déphasage sur chaque nano-antenne.

La solution proposée par les inventeurs est illustrée dans la suite.

La figure 2 montre un premier mode de réalisation d'un dispositif 200 selon l'invention.

Le dispositif 200 comporte ici :

- un guide d'onde d'injection 210, recevant en entrée un faisceau lumineux 11 fourni par une source lumineuse 10 ;
- une pluralité de guides d'onde d'émission 220, agencés ici en étoile ; et
- une pluralité de coupleurs optiques 260 répartis le long du guide d'onde d'injection 210, chacun en entrée d'un guide d'onde d'émission 220.

La source lumineuse 10 est une source monochromatique, en particulier une source laser, émettant un faisceau lumineux centré sur une longueur d'onde $\lambda_P$. Elle est disposée en entrée du guide d'onde d'injection 210, au niveau d'une première extrémité de celui-ci. Elle émet le faisceau lumineux 11, dans le guide d'onde 210 d'injection.

La source lumineuse 10 ne fait pas partie intégrante du dispositif 200 selon l'invention.

Le guide d'onde d'injection 210 est configuré pour recevoir et guider optiquement la lumière, à des longueurs d'onde autour de $\lambda_P$.

Le guide d'onde d'injection 210 est constitué ici de silicium.

Il présente une région d'entrée 211, du côté de la source lumineuse 10, et une région d'injection 212, qui s'étend ici le long de la quasi-totalité d'un cercle $\mathcal{C}$, selon une forme d'anneau ouvert.

Les guides d'onde d'émission 220 et les coupleurs optiques 260 s'étendent à l'intérieur de ce cercle $\mathcal{C}$.

Chaque coupleur optique 260 est situé le long du guide d'onde d'injection 210, entre une surface latérale du guide d'onde d'injection 210 et l'extrémité d'entrée d'un guide d'onde d'émission 220.

Chaque coupleur optique 260 présente un taux de couplage ajustable, à la longueur d'onde $\lambda_P$.

Chaque coupleur optique 260 est constitué ici d'un anneau de couplage chauffant, c'est-à-dire un guide d'onde replié sur lui-même selon une forme d'anneau, et connecté électriquement à une source de courant ou de tension, non représentée. En fonction de l'intensité du courant, respectivement de la tension, l'anneau chauffe plus ou moins, ce qui modifie son indice optique, et donc la condition de phase constructive dans l'anneau. La longueur d'onde de couplage de l'anneau est ainsi modifiée, pour l'éloigner ou la rapprocher de la longueur d'onde $\lambda_P$. Ainsi, le chauffage plus ou moins intense de l'anneau modifie sa capacité à coupler optiquement, à la longueur d'onde $\lambda_P$, le guide d'onde d'injection 210 et un guide d'onde d'émission 220. Le couplage est de type évanescent, généralement sans contact physique direct entre l'anneau et le guide d'onde d'injection, respectivement entre l'anneau et le guide d'onde d'émission associé.

Ici, les coupleurs optiques 260 sont en silicium.

Un coupleur optique à taux de couplage ajustable est connu de l'art antérieur, et ne sera donc pas décrit ici plus en détail.

En variante, chaque coupleur optique 260 à taux de couplage ajustable comprend un coupleur optique en anneau et un élément chauffant annexe, disposé contre le coupleur optique et connecté électriquement à une source de courant ou de tension.

On dit que le coupleur optique 260 est passant lorsqu'il est adapté à transférer, vers le guide d'onde d'émission le plus proche, une partie du faisceau lumineux 11 à la longueur d'onde $\lambda_P$ transitant dans le guide d'onde d'injection 210.

On dit que le coupleur optique est bloquant lorsqu'il ne permet pas ce transfert.

On peut définir un premier seuil, un coupleur optique dont le taux de couplage à la longueur d'onde $\lambda_P$ est supérieur à ce premier seuil étant dit passant.

On peut définir un second seuil, un coupleur optique dont le taux de couplage à la longueur d'onde $\lambda_P$ est inférieur à ce second seuil étant dit bloquant. Le premier et le second seuils peuvent être égaux.

Chaque coupleur optique 260 est disposé en entrée d'un guide d'onde d'émission respectif, qui reçoit ou ne reçoit pas de lumière selon que le coupleur optique est passant ou bloquant. On peut considérer que le guide d'onde d'injection 210 et les coupleurs optiques 260 forment ensemble un multiplexeur avec sélection de voies.

Chaque guide d'onde d'émission 220 est configuré pour recevoir et guider optiquement la lumière, à des longueurs d'onde autour de $\lambda_P$.

Chaque guide d'onde d'émission 220 est constitué ici de silicium.

De préférence, le guide d'onde d'injection 220, les coupleurs optiques 260, et les guides d'onde d'émission 220 présentent tous la même composition chimique, excepté le cas échéant pour ce qui est d'une concentration en ions dopants.

Les guides d'onde d'émission 220 s'étendent ici, avec les coupleurs optiques 260 et le guide d'onde d'injection 220, sur un même plan (OXY) d'un repère orthonormé (OXYZ).

Les guides d'onde d'émission 220 présentent en particulier des faces inférieures respectives coplanaires, parallèles au plan (OXY).

Chaque guide d'onde d'émission 220 comporte ici trois tronçons :

- un tronçon de couplage 221, situé en amont du guide d'onde d'émission 220 (relativement au sens de propagation, dans ledit guide d'onde, de la lumière émise par la source lumineuse 10) ;
- un tronçon de déphasage 222, en aval du tronçon 221 ; et
- un tronçon rectiligne 223, en aval du tronçon 222 de déphasage.

Au moins une partie du tronçon de couplage 221 s'étend parallèle à une tangente à l'anneau de couplage 260 correspondant. Le tronçon de couplage 221 forme une région d'admission du guide d'onde d'émission 220, adaptée à recevoir un signal à la longueur d'onde $\lambda_P$ provenant du guide d'onde d'injection 210, lorsque le coupleur optique 260 correspondant est passant.

Le tronçon de déphasage 222 présente ici une forme de serpentin.

Il est connecté électriquement à une source de courant ou de tension, non représentée. En fonction de l'intensité du courant, respectivement de la tension, le tronçon 222 chauffe plus ou moins, ce qui modifie son indice optique. La modification plus ou moins importante de cet indice optique entraîne un décalage plus ou moins important de la phase optique d'un signal lumineux se propageant dans ledit tronçon 222, par effet thermo-optique.

Selon une variante non représentée, le tronçon de déphasage est chauffé par l'intermédiaire d'un élément chauffant annexe. L'élément chauffant annexe est disposé contre ledit tronçon de déphasage. L'élément chauffant annexe est par exemple une bande métallique, connectée électriquement à une source de courant ou de tension.

En variante, le tronçon de déphasage 222 est réalisé en matériau dopé, et l'ajustement du déphasage qu'il apporte est réalisé par injection ou désertion de porteurs.

Le tronçon 222 forme ainsi un élément de déphasage, disposé en aval d'un coupleur optique 260 et en amont d'un tronçon rectiligne 223 selon l'invention, permettant d'apporter un déphasage souhaité à un signal lumineux provenant du guide d'onde d'injection, avant qu'il ne parvienne audit tronçon rectiligne 223.

Un tel élément de déphasage est connu de l'art antérieur, et ne sera donc pas décrit ici plus en détail.

Les tronçons rectilignes 223 s'étendent ici chacun selon un rayon du cercle $\mathcal{C}$ mentionné ci-avant.

Ils sont répartis régulièrement, selon un pas angulaire $\beta$. Pour des raisons de lisibilité, on a représenté un exemple dans lequel ce pas $\beta$ vaut 30°. En pratique, ce pas $\beta$ est de préférence inférieur ou égal à 10°, voire même inférieur ou égal à 5°.

Les tronçons rectilignes 223 sont répartis ici sur une plage angulaire de 360°.

Les tronçons rectilignes 223 présentent chacun une extrémité d'entrée 2231, et une extrémité de sortie 2232, du côté opposé à l'extrémité d'entrée 2231.

Les extrémités d'entrée 2231 des différents guides d'onde d'émission sont toutes situées du côté du guide d'onde d'injection 210.

Les extrémités de sortie 2232 des différents guides d'onde d'émission sont toutes positionnées dans une zone 240, nommée zone de cœur.

C'est au niveau des extrémités de sortie 2232 que la distance entre deux guides d'onde d'émission est minimale. La distance centre à centre entre deux guides d'onde d'émission voisins y est cependant supérieure à $\lambda_P/2$, afin d'éviter un couplage optique entre ces derniers.

Chaque tronçon rectiligne 223 reçoit une pluralité d'éléments d'extraction de puissance optique, dits éléments d'extraction 230, illustrés par des carrés noirs respectifs.

Les éléments d'extraction 230 permettent chacun d'extraire au moins une partie d'un signal lumineux incident circulant dans ledit tronçon, vers un même demi-espace délimité par les tronçons rectilignes, ici un demi-espace supérieur situé au-dessus des tronçons rectilignes.

Sur un même tronçon rectiligne, les différents éléments d'extraction sont répartis selon l'axe longitudinal dudit tronçon. Leurs taux d'extraction sont adaptés pour que chacun puisse émettre une partie d'un signal lumineux arrivant en entrée dudit tronçon.

Chaque élément d'extraction 230 est constitué d'une structure diffractante ou diffusante. Chaque structure peut être surfacique, s'étendant ici seulement dans une région supérieure de l'un des tronçons rectiligne 223. En variante, ladite structure peut être traversante. En tout état de cause, des moyens de réflexion tels qu'un miroir ou un dioptre peuvent s'étendre au regard de ladite structure, ici du côté d'une face inférieure du tronçon rectiligne, pour extraire la lumière vers le demi-espace supérieur au-dessus du plan des tronçons rectilignes.

Chaque élément d'extraction 230 est par exemple un réseau d'extraction surfacique, ou même un simple trou, traversant ou non.

Lorsque les éléments d'extraction 230 sont des réseaux d'extraction, les différents réseaux d'un même tronçon rectiligne 223 présentent la même orientation et la même période.

Le décalage angulaire entre l'orientation des réseaux d'extraction et l'orientation du tronçon rectiligne 223 correspondant peut être constant. Dans ce cas, dans le mode de réalisation illustré en figure 2, les réseaux de deux tronçons rectilignes 223 différents présentent des orientations différentes.

En tout état de cause, qu'il s'agisse ou non de réseaux d'extraction, les éléments d'extraction 230 d'un même tronçon rectiligne 223 sont avantageusement déphasés de $2k\pi$, $k$ entier. Ce déphasage de $2k\pi$ est permis en espaçant les éléments d'extraction 230 le long du tronçon rectiligne 223 d'une distance d multiple de $k * \dfrac{\lambda}{N_{eff}}$, avec $N_{eff}$ l'indice effectif du mode guidé dans le tronçon rectiligne 223. Autrement dit, les éléments d'extraction d'un même tronçon rectiligne 223 sont de préférence espacés deux à deux d'une distance d telle que :

$$d = j * \frac{\lambda_p}{N_{eff}} \qquad\qquad (4)$$

avec $j$ un entier positif et $N_{eff}$ l'indice effectif du mode guidé dans le tronçon rectiligne 223.

La distance $d$ est une distance centre à centre.

De préférence, cette distance $d$ est constante le long d'un même tronçon rectiligne 223. En d'autres termes, sur chaque tronçon rectiligne 223, les éléments d'extraction 230 sont répartis selon un pas régulier $p$.

Le pas $p$ est avantageusement le même sur tous les tronçons rectilignes 223.

Les éléments d'extraction 230 des différents tronçons rectilignes 223 sont répartis ici le long d'une série de cercles concentriques. Chacun de ces cercles reçoit un unique élément d'extraction de chacun des tronçons rectilignes 223.

De préférence, la distance centre à centre entre deux éléments d'extraction 230 appartenant à deux guides d'onde d'émission voisin, reste inférieure à quelques $\lambda_P$, par exemple inférieure à $5 * \lambda_P$.

En pratique, le guide d'onde d'injection 210, les coupleurs optiques 260 et les guides d'onde d'émission 220 sont avantageusement noyés dans de l'oxyde de silicium (silice), ce dernier faisant office de gaine pour les guides d'onde d'émission 220.

On sélectionne une orientation d'un faisceau principal d'émission, défini en champ lointain, en ajustant le taux de couplage de chacun des coupleurs optiques, et le déphasage apporté par les éléments de déphasage recevant de la puissance optique.

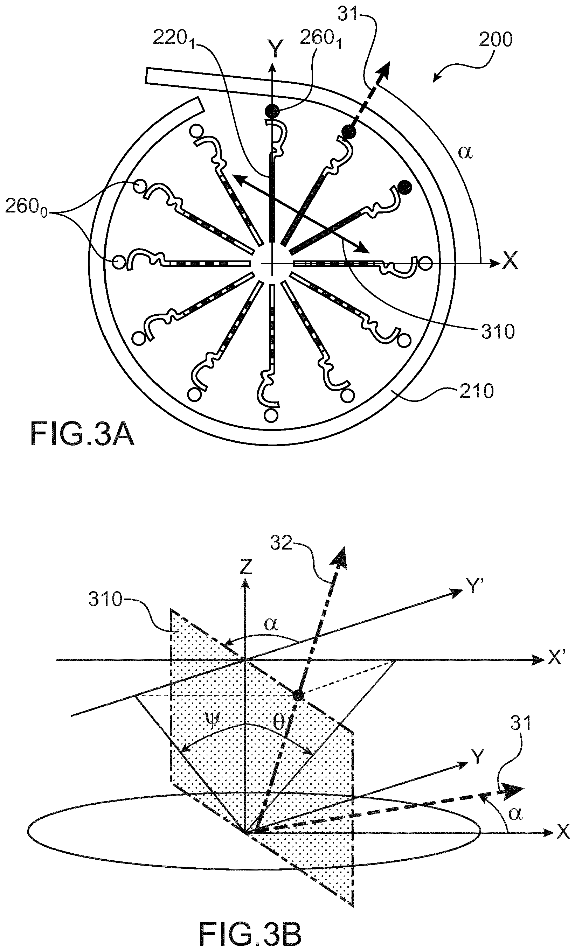

On illustre en détail, à l'aide des figures 3A et 3B, le fonctionnement du dispositif d'émission 200.

A la figure 3A, le dispositif d'émission est représenté selon une vue de dessus.

A la figure 3B, il est représenté de façon schématique, selon une vue en perspective.

En figure 3B, le repère orthonormé (OXYZ) est centré sur le centre du cercle $\mathcal{C}$ mentionné ci-avant. On a également représenté, en figure 3B, un repère (OX'Y'), projection selon (OZ), en champ lointain, du repère (OXY).

Selon l'invention, tous les coupleurs optiques ne présentent pas le même taux de couplage, à chaque instant.

A chaque instant, les coupleurs optiques passants sont des coupleurs optiques directement voisins entre eux (ou deux groupes de coupleurs optiques voisins opposés, associés à une même direction moyenne du fait de la symétrie du dispositif d'émission, voir plus loin).

A la figure 3A, les coupleurs optiques $260_1$ à l'état passant sont représentés par un disque noir, et les coupleurs optiques $260_0$ à l'état bloquant sont représentés par un simple cercle.

Ici, seulement trois coupleurs optiques sont passants, les autres étant bloquants.

Les trois coupleurs optiques passants $260_1$ sont associés respectivement à trois guides d'onde d'émission $220_1$, dits activés, représentés chacun par un trait plein épais. La lumière transitant dans le guide d'onde d'injection 210 est couplée vers ces trois guides d'onde activés $220_1$. Les autres guides d'onde d'émission $220_0$ ne reçoivent pas de lumière.

L'ajustement des taux de couplage des coupleurs optiques peut être binaire. Le taux de couplage ne peut alors prendre que deux valeurs, soit une valeur basse, correspondant à un coupleur bloquant, soit une valeur haute correspondant à un coupleur passant.

En variante, l'ajustement des taux de couplage peut offrir un réglage fin, par exemple pour affiner la largeur du faisceau principal d'émission émis, en champ lointain, par le dispositif d'émission selon l'invention.

On peut également prévoir un ajustement précis des taux de couplage, de manière à coupler la même quantité de lumière dans chacun des guides d'onde activés $220_1$. Pour cela, le taux de couplage associé à chacun des coupleurs optiques passants $260_1$ augmente au fur et à mesure que l'on s'éloigne de la région d'entrée 211 du guide d'onde d'injection.

En fonctionnement, la lumière se propage dans le guide d'onde d'injection, puis elle est injectée dans les guides d'onde $220_1$ activés, via les coupleurs optiques passants $260_1$.

Dans chaque guide d'onde activité, la lumière passe par le tronçon de déphasage, où sa phase optique est décalée d'une valeur prédéterminée (cette valeur pouvant être nulle).

Ensuite, la lumière parvient successivement à chacun des éléments d'extraction du tronçon rectiligne. Chaque élément d'extraction extrait une partie de la puissance optique hors du guide d'onde d'émission, et forme ainsi une source élémentaire de lumière.

Selon une variante avantageuse, les éléments d'extraction d'un même tronçon rectiligne présentent des valeurs différentes du taux d'extraction de la puissance optique, et cette valeur augmente au fur et à mesure que l'on s'éloigne de l'entrée dudit tronçon. Ainsi, la perte de puissance optique en entrée d'un élément d'extraction, due à l'extraction dans le ou les élément(s) d'extraction en amont, est compensée par un taux d'extraction plus élevé. On peut ainsi égaliser les puissances optiques extraites par chacun des éléments d'extraction d'un même tronçon rectiligne.

Pour obtenir ces taux d'extraction croissants, les éléments d'extraction peuvent présenter une largeur croissante au fur et à mesure que l'on s'éloigne de l'entrée du tronçon rectiligne (trous de plus en plus larges, ou réseaux d'extraction de plus en plus longs). En complément ou en variante, les éléments d'extraction peuvent présenter une profondeur de gravure qui augmente au fur et à mesure que l'on s'éloigne de l'entrée du tronçon.

La direction moyenne, 31, associée aux tronçons rectilignes des guides d'onde activés $220_1$ est définie par un angle $\alpha$. Cet angle est défini relativement à l'axe (OX) du repère orthonormé (OXYZ).

Cette direction moyenne définit un plan d'extraction 310, orthogonal à ladite direction moyenne 31, à la longueur d'onde $\lambda_P$.

Le plan d'extraction 310 est un plan vertical, parallèle à l'axe (OZ), incliné de l'angle $\alpha$ relativement au plan (OYZ).

Le plan d'extraction 310 est le plan recevant l'ensemble des directions principales d'émission, accessibles à l'aide des trois guides d'onde activés $220_1$.

Les directions principales d'émission sont définies en champ lointain, c'est-à-dire à une distance du dispositif d'émission supérieure à la taille caractéristique dudit dispositif, et même, en pratique, à une distance du dispositif d'émission supérieure à quelques centimètres, par exemple supérieure à 5 cm.

La direction principale d'émission est représentée en figure 3B par une flèche 32. Elle est définie uniquement en champ lointain, et s'étend dans le plan d'extraction 310. Son orientation dépend des déphasages entre les signaux lumineux émis par les éléments d'extraction des guides d'onde activés $220_1$. Cette orientation est définie, dans l'espace à trois dimensions, par deux angles $\theta$ et $\psi$. Les angles $\theta$ et $\psi$ correspondent respectivement à un angle de déviation dans le plan (OXZ) et dans le plan (OYZ).

En pilotant l'état passant ou bloquant des coupleurs optiques 260, on peut donc sélectionner une orientation moyenne des tronçons rectilignes activés, et donc une orientation souhaitée du plan d'extraction.

La figure 3A, en particulier, montre que le décalage des trois guides d'onde activés $220_1$ se traduit par une rotation du plan d'extraction autour de l'axe (OZ).

Le pilotage du taux de couplage d'un coupleur optique est avantageusement réalisé par le pilotage d'une valeur d'intensité du courant ou de la tension, d'un signal électrique fournissant un chauffage, par effet Joule, à ce coupleur optique.

Ensuite, en pilotant le déphasage apporté par chacun des éléments de déphasage 250 associés aux guides d'onde activés $220_1$, on peut sélectionner une orientation souhaitée de la direction principale d'émission, dans le plan d'extraction.

Le pilotage du déphasage est avantageusement réalisé par le pilotage d'une valeur d'intensité du courant ou de la tension, d'un signal électrique fournissant un chauffage, par effet Joule, à un élément de déphasage selon l'invention.

Les éléments permettant de définir une orientation prédéterminée de la direction principale d'émission sont donc déportés d'une région recevant les sources élémentaires (ici, les éléments d'extraction).

Ces éléments sont situés en outre dans une région où ils sont éloignés les uns des autres, du fait de l'agencement radial des tronçons rectilignes recevant les sources élémentaires.

On peut ainsi concilier à la fois un fort encombrement des éléments de déphasage, et une très faible distance entre deux sources élémentaires voisines.

Les guides d'onde en nitrure de silicium ($Si_3N_4$) supportent des puissances optiques bien supérieures à celles que peuvent supporter des guides d'onde en silicium. Ils peuvent en particulier transporter des faisceaux de forte puissance optique sans que cela n'induise l'apparition d'effets non linéaires susceptible de déformer ces faisceaux.

En revanche, le nitrure de silicium étant peu sensible aux variations de température, des tronçons de déphasage en nitrure de silicium doivent être plus longs que lorsqu'ils sont en silicium.

En déportant ces tronçons de déphasage hors d'une zone émissive recevant les sources élémentaires, l'invention permet de réaliser les guides d'onde d'émission en nitrure de silicium ($Si_3N_4$), plutôt qu'en silicium, sans que cela se traduise par une augmentation de la distance entre deux sources élémentaires voisines.

Une faible distance entre deux sources élémentaires voisines permet d'éviter des phénomènes de réplication de faisceau.

On peut ainsi augmenter une puissance optique circulant dans le dispositif d'émission selon l'invention, et donc une puissance optique réémise par ce dernier, sans que cela se traduise par l'apparition de phénomènes de réplication de faisceau. En d'autres termes, on propose une matrice de phases optiques pouvant délivrer plus de puissance utile que dans l'art antérieur, sans détérioration de la qualité de faisceau.

Ces fortes puissances optiques sont particulièrement avantageuses dans le cadre d'une utilisation du dispositif selon l'invention, comme émetteur d'un dispositif de télédétection par laser. En effet, l'augmentation de la puissance optique émise par le dispositif selon l'invention se traduit alors par une augmentation de la distance maximale de détection. Grâce à l'invention, cette augmentation de la distance de détection n'est pas accompagnée de l'apparition de phénomènes de réplication de faisceau, susceptibles de perturber la détection. D'éventuelles réplications de faisceau sont suffisamment éloignées angulairement du faisceau principal pour qu'elles ne nuisent pas à la détection.

L'utilisation de guides d'onde d'émission en nitrure de silicium permet notamment de détecter des objets situés à plus de 100 mètres, voire 200 mètres du dispositif d'émission selon l'invention. Pour comparaison, cette distance est inférieure au mètre, en technologie silicium.

De telles distances de détection peuvent présenter un intérêt particulier, en particulier dans le domaine automobile.

On démontre dans la suite que la distance réduite entre deux éléments d'extraction voisins permet de limiter des phénomènes de réplication de faisceau, même dans la configuration particulière de l'invention.

Dans un dispositif d'émission selon l'invention, tous les éléments d'extraction d'un même tronçon rectiligne émettent avec la même phase optique.

On note $\theta_m$ et $\psi_m$ les angles définissant l'orientation dans l'espace de la direction principale d'émission (m = 1) et des éventuelles réplications de faisceau (m > 1).

L'orientation de la direction principale d'émission, respectivement des éventuelles réplications de faisceau, est définie par :

$$\sqrt{sin^2(\theta_m) + sin^2(\psi_m)} = \frac{\Delta\varphi + m * 2\pi}{k_0 * P} \tag{5}$$

avec $\Delta\varphi$ le déphasage entre deux tronçons rectilignes voisins, P la distance caractéristique entre deux éléments d'extraction de deux tronçons rectilignes voisins, et m un entier tel que :

$$sin^2(\theta_m) + sin^2(\psi_m) \leq 1 \tag{6}$$

Les deux angles $\theta_m$ et $\psi_m$ ne sont donc pas indépendants l'un de l'autre (même variable m). Cependant, ils sont reliés par :

$$\tan(\alpha) = -\frac{\sin(\psi_m)}{\sin(\theta_m)} \tag{7}$$

En faisant varier les valeurs de $\alpha$ (via le choix de l'état passant ou bloquant des coupleurs optiques 260), et $\Delta\varphi$ (via les éléments de déphasage 250), on peut donc accéder à toutes les valeurs possibles de $\theta_m$ et $\psi_m$.

D'après les équations (5) et (6), la non réplication de faisceau est atteinte pour de faibles valeurs de P, ce qui est possible puisque les éléments de déphasage 250 sont déportés des tronçons rectilignes recevant les éléments d'extraction.

On illustre ensuite des résultats obtenus par simulations numériques, à l'aide d'un modèle analytique basé sur les fonctions de Green.

Ce modèle est basé sur l'hypothèse selon laquelle les sources élémentaires que sont les éléments d'extraction sont des sources dipolaires, l'orientation du dipôle étant celui du champ électrique dans le guide d'onde d'émission correspondant.

Le champ électrique rayonné par une source élémentaire est défini comme une combinaison du champ électrique rayonné par un dipôle orienté selon (OX), et du champ électrique rayonné par un dipôle orienté selon (OY).

En sommant les champs électriques provenant des différentes sources élémentaires, on obtient l'intensité électrique (module du champ électrique total au carré) dans un plan d'observation lointain (ici $1000 * \lambda_p$), qui décrit l'ensemble des angles $\theta$ et $\psi$ et permet ainsi de visualiser le diagramme d'extraction.

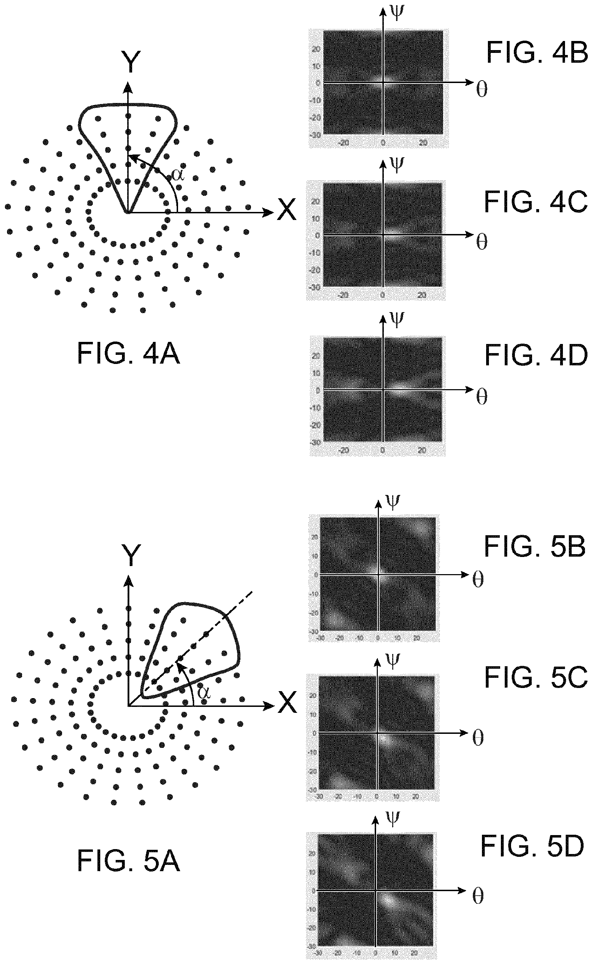

Les figures 4A à 4D illustrent une simulation de la sélection d'un premier plan d'extraction, à l'aide d'un dispositif d'émission selon l'invention, et un balayage de la direction principale d'émission dans ledit plan d'extraction.

La figure 4A illustre de façon schématique, selon une vue de dessus, les éléments d'extraction d'un dispositif d'émission du type de celui représenté en figure 2, comportant 25 guides d'onde d'émission polarisés TE (champ électrique perpendiculaire aux guides).

La longueur d'onde d'émission vaut $\lambda_p$ = 1,55 $\mu m$.

Les guides d'onde d'émission sont en silicium.

Le pas de répartition des éléments d'extraction sur un guide d'onde d'émission vaut 3 $\mu$m.

La distance centre à centre entre les éléments d'extraction de deux tronçons rectilignes voisins est également d'environ 3 $\mu$m.

Les éléments d'extraction entourés correspondent aux guides d'onde d'émission activés, ici au nombre de trois.

La direction moyenne des tronçons rectilignes des guides d'onde activés vaut $\alpha$ = 90°.

Les figures 4B à 4D illustrent la répartition de la puissance optique en champ lointain pour différentes valeurs du déphasage apporté par les éléments de déphasage des guides d'onde activés.

Ces différentes valeurs du déphasage correspondent ici à un déphasage $\Delta\varphi$ entre les faisceaux circulant sur les tronçons rectilignes de deux guides d'onde activés directement voisins.

L'axe des abscisses et l'axe des ordonnées correspondent respectivement aux angles $\theta$ et $\psi$ définis ci-avant.

Sur chacune de ces figures, on observe un point lumineux correspondant à la direction principale d'émission.

A la figure 4B, le déphasage $\Delta\varphi$ est nul (les phases optiques associées aux trois guides d'onde activés sont respectivement $\varphi = 0°$; $\varphi = 0°$; $\varphi = 0°$). Le point lumineux est positionné en ($\theta = 0°$; $\psi = 0°$).

A la figure 4C, le déphasage $\Delta\varphi$ est de 60° (les phases optiques associées aux trois guides d'onde activés sont respectivement $\varphi = -60°$; $\varphi = 0°$; $\varphi = +60°$). Le point lumineux est positionné en ($\theta = 5°$; $\psi = 0°$).

A la figure 4D, le déphasage $\Delta\varphi$ est de 120° (les phases optiques associées aux trois guides d'onde activés sont respectivement $\varphi = -120°$; $\varphi = 0°$; $\varphi = +120°$). Le point lumineux est positionné en ($\theta = 8°$; $\psi = 0°$).

On observe bien un plan d'extraction défini par $\psi = 0°$, parallèle au plan (OXZ).

L'ajustement des déphasages permet de réaliser un balayage dans ce plan.

Les figures 5A à 5D illustrent une simulation de la sélection d'un deuxième plan d'extraction, à l'aide d'un dispositif d'émission selon l'invention, et un balayage de la direction principale d'émission dans ce plan d'extraction.

La figure 5A ne diffère de la figure 4A qu'en ce que l'angle $\alpha$ vaut cette fois 45°.

Les figures 5B à 5D correspondent respectivement aux trois mêmes phases des guides d'onde activés que les figures 4B à 4D.

On observe bien un plan d'extraction défini par $\theta = -\psi$. L'ajustement des déphasages permet de réaliser un balayage dans ce plan.

On peut remarquer que le dispositif d'émission illustré en figure 2 présente une certaine redondance, du fait de sa symétrie centrale. Chaque orientation du plan d'extraction peut être obtenue de deux façons différentes, à l'aide d'une première ou d'une seconde série de guides d'onde activés, symétriques l'une de l'autre.

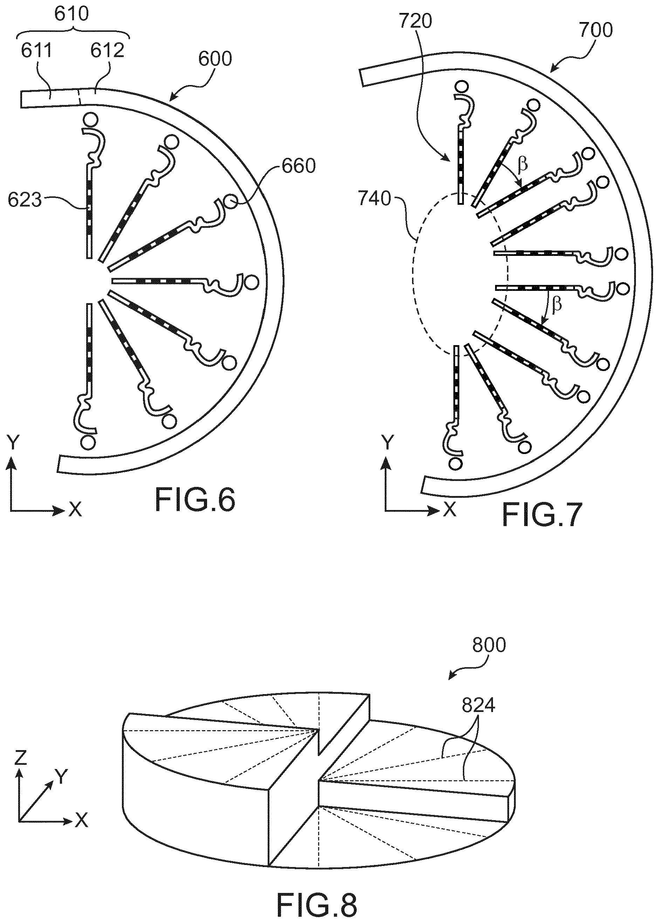

A la figure 6, on a illustré, selon une vue de dessus, un deuxième mode de réalisation d'un dispositif 600 selon l'invention.

Ce deuxième mode de réalisation ne diffère du premier mode de réalisation qu'en ce que les tronçons rectilignes 623 sont répartis sur 180°, et non sur 360°.

Le nombre de tronçons rectilignes 623 est divisé par deux. Il en est donc de même pour le nombre de coupleurs optiques 660 et le nombre d'éléments de déphasage.

Pour les raisons mentionnées ci-dessus, cela n'entraîne pas de diminution du nombre d'orientation possibles pour le plan d'extraction.

Le guide d'onde d'injection 610 présente une région d'entrée 611 et une région d'injection 612, qui s'étend alors le long d'un demi-cercle, selon une forme de demi-anneau.

Ce deuxième mode de réalisation présente l'avantage d'offrir une grande compacité en surface (footprint).

La figure 7 illustre de façon schématique, selon une vue de dessus, un troisième mode de réalisation d'un dispositif 700 selon l'invention.

Ce mode de réalisation ne sera décrit que pour ses différences relativement au mode de réalisation de la figure 6.

Ici, les tronçons rectilignes des guides d'onde d'émission 720 ne sont pas orientés selon des rayons d'un même cercle.

Certains tronçons rectilignes voisins sont agencés parallèles entre eux, tandis que d'autres tronçons rectilignes voisins sont agencés inclinés entre eux d'un angle $\beta$.

Les différents tronçons rectilignes sont tous orientés vers une même zone de cœur 740, située, pour chaque tronçon rectiligne, du côté opposé au coupleur optique associé.

Ce mode de réalisation permet de privilégier certains plans d'extraction.

La figure 8 illustre de façon schématique, selon une vue en perspective, un quatrième mode de réalisation d'un dispositif 800 selon l'invention.

On a simplement représenté, en figure 8, les axes 824 d'orientation des tronçons rectilignes des différents guides d'onde d'émission.

Selon ce mode de réalisation, les guides d'onde d'émission ne sont pas tous situés sur un même plan parallèle à (OXY). En particulier, les faces inférieures des différents guides d'onde d'émission ne sont pas toutes situées dans un même plan parallèle à (OXY).

Au moins deux guides d'onde d'émission présentent des faces inférieures situées dans deux plans différents, tous deux parallèles à (OXY). Le dispositif d'émission est dit multi-niveaux.

Les différents tronçons rectilignes sont ici orientés non pas selon des rayons d'un même cercle, mais selon des rayons d'un même cylindre de révolution. En d'autres termes, ils sont orientés selon des rayons de différents cercles, correspondant à des sections orthogonales, à différentes hauteurs, d'un même cylindre de révolution.

Les éléments d'extraction peuvent alors être répartis le long des faces latérales de cylindres de révolution concentriques.

Ce mode de réalisation permet de disposer des éléments de déphasage voisins dans des plans séparés parallèles à (OXY), ce qui permet de densifier encore l'agencement des éléments de déphasage, et donc de densifier encore les tronçons rectilignes et les éléments d'extraction de puissance optique. On peut ainsi limiter plus encore la réplication de faisceaux.

Selon une variante avantageuse, les guides d'onde d'émission, et plus particulièrement leurs faces inférieures, sont réparties alternativement dans un premier et dans un second plan parallèle à (OXY). Les éléments de déphasage sont répartis, de la même façon, alternativement dans ce premier et ce second plan. Dans ce cas, le guide d'onde d'injection peut s'étendre au niveau de l'un parmi ce premier et ce second plan. Il réalise alors un couplage évanescent par le côté dans l'un parmi ce premier et ce second plan, et par le dessus ou le dessous dans l'autre parmi ce premier et ce second plan.

L'invention n'est pas limitée aux exemples détaillés ci-dessus, et de nombreuses variantes peuvent être mises en œuvre sans sortir du cadre de l'invention.

Par exemple, un pas de répartition des éléments d'extraction n'est pas nécessairement identique sur tous les tronçons rectilignes.

En outre, les tronçons rectilignes ne comportent pas forcément tous un même nombre d'éléments d'extraction.

Chaque tronçon rectiligne peut même ne comporter qu'un seul élément d'extraction. Les différents éléments d'extraction sont alors agencés, de préférence, le long d'un même cercle. Le diagramme d'émission en champ lointain présente alors un trait lumineux, et non un point lumineux.

Les éléments d'extraction des différents tronçons rectilignes peuvent être disposés le long de différents motifs, où chaque motif reçoit un unique élément d'extraction de chacun des tronçons rectilignes, et où les motifs sont tous des homothéties d'une même forme de base quelconque, avec différents rapports de grandissement.

On a cité comme exemple de coupleur optique à taux de couplage ajustable, un anneau de couplage chauffant. L'invention n'est cependant pas limitée à cet exemple. Par exemple, le coupleur optique peut être constitué d'un anneau de couplage en matériau dopé, dans lequel l'ajustement du taux de couplage est réalisé par injection ou désertion de porteurs. En variante, chaque coupleur optique à taux de couplage ajustable peut comprendre un segment de guide résonant à miroirs de Bragg, un résonateur à cristaux photoniques, des micro-disques. Comme énoncé précédemment, chaque coupleur optique selon l'invention peut être constitué d'un simple commutateur optique. Tout commutateur à une voie d'entrée et deux voies de sortie peut alors être utilisé, par exemple un interféromètre multimode, un interféromètre de Mach-Zehnder, etc.

L'invention peut également concerner un système complet d'émission d'un front d'onde électromagnétique, comportant le dispositif d'émission selon l'invention, chaque coupleur optique comprenant un anneau de couplage et chaque élément de déphasage comportant un tronçon du guide d'onde d'émission correspondant, dit tronçon de déphasage, le système comportant en outre :

- un dispositif de pilotage des intensités d'une série de tensions ou de courants électriques fournissant un chauffage par effet Joule, à chacun des anneaux de couplage ; et
- un dispositif de pilotage des intensités d'une série de tensions ou de courants électriques fournissant un chauffage par effet Joule, à chacun des tronçons de déphasage associés à un coupleur optique dont le taux de couplage est supérieur à un seuil prédéterminé.


## Revendications

1. Dispositif (200 ; 600 ; 700) d'émission d'un front d'onde électromagnétique, prévu pour, en utilisation, être connecté à une source lumineuse (10) émettant un faisceau lumineux (11), et comprenant :

   - au moins trois guides d'onde d'émission (220 ; 720), comportant chacun un tronçon rectiligne (223 ; 623) qui reçoit un ou plusieurs élément(s) d'extraction de puissance optique, dit(s) élément(s) d'extraction (230) ; et
   - en amont de chacun desdits tronçons rectilignes, un élément respectif de déphasage (222) ;
   **caractérisé en ce que** :
   - le dispositif comporte en outre, en amont de chacun desdits éléments de déphasage, un coupleur optique respectif (260 ; 660), chaque coupleur optique présentant un taux de couplage ajustable ; et
   - au moins deux desdits tronçons rectilignes (223 ; 623) s'étendent selon des droites qui ne sont pas parallèles entre elles.

2. Dispositif (200 ; 600 ; 700) selon la revendication 1, **caractérisé en ce qu'**il comporte en outre, un guide d'onde d'injection (210 ; 610), le long duquel sont répartis les coupleurs optiques (260 ; 660), chaque coupleur optique (260 ; 660) étant situé entre le guide d'onde d'injection (210 ; 610) et l'un des éléments de déphasage (222).

3. Dispositif (200 ; 600 ; 700) selon la revendication 1 ou 2, **caractérisé en ce que** chaque tronçon rectiligne (223 ; 623) comporte une pluralité d'éléments d'extraction (230), répartis le long dudit tronçon rectiligne selon un pas régulier.

4. Dispositif (200 ; 600 ; 700) selon la revendication 3, **caractérisé en ce que** ledit pas régulier est le même, sur chacun desdits tronçons rectilignes (223 ; 623).

5. Dispositif (200 ; 600 ; 700) selon l'une quelconque des revendications 1 à 4, **caractérisé en ce que** chaque tronçon rectiligne (223 ; 623) comporte une pluralité d'éléments d'extraction (230), présentant différents taux d'extraction, et agencés le long dudit tronçon par ordre croissant de ce taux d'extraction, depuis une extrémité d'entrée (2231) dudit tronçon, du côté de l'élément correspondant de déphasage (222).

6. Dispositif (200 ; 600 ; 700) selon l'une quelconque des revendications 1 à 5, **caractérisé en ce que** chaque tronçon rectiligne (223 ; 623) comporte une pluralité d'éléments d'extraction (230), et **en ce que** les éléments d'extraction sont répartis le long d'une série de motifs, les différents motifs étant des homothéties les uns des autres, et à chaque motif correspondant un élément d'extraction (230) de chacun desdits tronçons.

7. Dispositif (200 ; 600 ; 700) selon l'une quelconque des revendications 1 à 6, **caractérisé en ce que** chaque tronçon rectiligne (223 ; 623) comporte une pluralité d'éléments d'extraction (230), **en ce que** chacun desdits éléments d'extraction est un réseau d'extraction, et **en ce que** les réseaux d'extraction d'un même tronçon rectiligne sont orientés selon la même direction et ont la même période.

8. Dispositif (200 ; 600 ; 700) selon l'une quelconque des revendications 1 à 7, **caractérisé en ce que** lesdits tronçons rectiligne (223 ; 623) sont tous orientés vers une même zone, dite zone de cœur (240 ; 740), située, pour chaque tronçon rectiligne (223 ; 623), du côté opposé à l'élément correspondant de déphasage (222).

9. Dispositif (200 ; 600) selon la revendication 8, **caractérisé en ce que** lesdits tronçons rectilignes (223 ; 623) sont orientés selon des rayons d'un même cercle ($\mathcal{C}$) ou d'un même cylindre.

10. Dispositif (200 ; 600) selon la revendication 9, **caractérisé en ce que** lesdits tronçons rectilignes (223 ; 623) sont agencés selon un pas de répartition angulaire ($\beta$) régulier.

11. Dispositif (200) selon la revendication 10, **caractérisé en ce que** lesdits tronçons rectilignes (223) sont répartis sur 360° d'angle.

12. Dispositif (600) selon la revendication 10, **caractérisé en ce que** lesdits tronçons rectilignes (623) sont répartis sur un angle compris entre 160° et 200°.

13. Dispositif (200 ; 600) selon l'une quelconque des revendications 9 à 12, **caractérisé en ce que** les éléments d'extraction (230) des différents tronçons rectilignes (223 ; 623) sont répartis le long d'une série de cercles concentriques ou de cylindres concentriques, à chaque cercle, ou cylindre, correspondant un élément d'extraction (230) de chacun desdits tronçons.

14. Dispositif (200 ; 600 ; 700) selon l'une quelconque des revendications 1 à 13, **caractérisé en ce que** les guides d'onde d'émission (220 ; 720) comprennent du nitrure de silicium.

15. Procédé d'utilisation d'un dispositif d'émission (200 ; 600 ; 700) selon l'une quelconque des revendications 1 à 14, dans lequel chaque coupleur optique (260 ; 660) comprend un anneau de couplage et chaque élément de déphasage (222) comporte un tronçon d'un guide d'onde d'émission, dit tronçon de déphasage, le procédé comportant :

- une étape d'ajustement du taux de couplage respectif de chacun des coupleurs optiques (260 ; 660), par ajustement de l'intensité d'une tension ou d'un courant électrique, fournissant un chauffage par effet Joule, à l'anneau de couplage correspondant ; et
- une étape d'ajustement d'un déphasage respectif apporté par chacun des éléments de déphasage (222) associés aux coupleurs optiques dont le taux de couplage dépasse un seuil prédéterminé, par ajustement de l'intensité d'une tension ou d'un courant électrique fournissant un chauffage, par effet Joule, au tronçon de déphasage correspondant.

**Patentansprüche**

1. Vorrichtung (200; 600; 700) zum Aussenden einer elektromagnetischen Wellenfront, die dazu vorgesehen ist, im Betrieb mit einer einen Lichtstrahl (11) aussendenden Lichtquelle (10) verbunden zu sein, enthaltend:

   - zumindest drei Emissionswellenleiter (220; 720), von denen jeder einen geradlinigen Abschnitt (223; 623) aufweist, der ein oder mehrere Element(e) zur Auskopplung von optische Leistung, Auskopplungselement(e) (230) genannt, aufnimmt; und
   - jedem der geradlinigen Abschnitte vorgelagert ein jeweiliges Phasenverschiebungselement (222); **dadurch gekennzeichnet, dass**:
   - die Vorrichtung ferner jedem der Phasenverschiebungselemente vorgelagert einen jeweiligen optischen Koppler aufweist (260; 660), wobei jeder optische Koppler ein einstellbares Kopplungsverhältnis aufweist; und
   - zumindest zwei der geradlinigen Abschnitte (223; 623) sich entlang von Geraden erstrecken, die nicht parallel zueinander verlaufen.

2. Vorrichtung (200; 600; 700) nach Anspruch 1, **dadurch gekennzeichnet, dass** sie ferner einen Einkopplungswellenleiter (210; 610) enthält, entlang dem die optischen Koppler (260; 660) verteilt sind, wobei jeder optische Koppler (260; 660) zwischen dem Einkopplungswellenleiter (210; 610) und einem der Phasenschiebungselemente (222) angeordnet ist.

3. Vorrichtung (200; 600; 700) nach Anspruch 1 oder 2, **dadurch gekennzeichnet, dass** jeder geradlinige Abschnitt (223; 623) eine Vielzahl von Auskopplungselementen (230) enthält, die entlang des geradlinigen Abschnitts in einem regelmäßigen Abstand verteilt sind.

4. Vorrichtung (200; 600; 700) nach Anspruch 3, **dadurch gekennzeichnet, dass** der regelmäßige Abstand bei jedem der geradlinigen Abschnitte (223; 623) der gleiche ist.

5. Vorrichtung (200; 600; 700) nach einem der Ansprüche 1 bis 4, **dadurch gekennzeichnet, dass** jeder geradlinige Abschnitt (223; 623) eine Vielzahl von Auskopplungselementen (230) mit unterschiedlichen Auskopplungsverhältnissen enthält, die entlang des Abschnitts in aufsteigender Reihenfolge dieses Auskopplungsverhältnisses von einem Eintrittsende (2231) des Abschnitts auf der Seite des entsprechenden Phasenverschiebungselements (222) angeordnet sind.

6. Vorrichtung (200; 600; 700) nach einem der Ansprüche 1 bis 5, **dadurch gekennzeichnet, dass** jeder geradlinige Abschnitt (223; 623) eine Vielzahl von Auskopplungselementen (230) enthält und dass die Auskopplungselemente entlang einer Reihe von Mustern verteilt sind, wobei die verschiedenen Muster Homothetien voneinander sind und jedem Muster ein Auskopplungselement (230) jedes der genannten Abschnitte entspricht.

7. Vorrichtung (200; 600; 700) nach einem der Ansprüche 1 bis 6, **dadurch gekennzeichnet, dass** jeder geradlinige Abschnitt (223; 623) eine Vielzahl von Auskopplungselementen (230) enthält und dass jedes der Auskopplungselemente ein Auskopplungsgitter ist und dass die Auskopplungsgitter desselben geradlinigen Abschnitts in derselben Richtung ausgerichtet sind und dieselbe Periode haben.

8. Vorrichtung (200; 600; 700) nach einem der Ansprüche 1 bis 7, **dadurch gekennzeichnet, dass** die geradlinigen Abschnitte (223; 623) alle auf den gleichen Bereich, Kernbereich (240; 740) genannt, ausgerichtet sind, der sich für jeden geradlinigen Abschnitt (223; 623) auf der dem entsprechenden Phasenverschiebungselement (222) entgegengesetzten Seite befindet.

9. Vorrichtung (200; 600) nach Anspruch 8, **dadurch gekennzeichnet, dass** die geradlinigen Abschnitte (223; 623) nach den Radien desselben Kreises (C) bzw. desselben Zylinders ausgerichtet sind.

10. Vorrichtung (200; 600) nach Anspruch 9, **dadurch gekennzeichnet, dass** die geradlinigen Abschnitte (223; 623) in einem gleichmäßigen Winkelverteilungsabstand ($\beta$) angeordnet sind.

**11.** Vorrichtung (200) nach Anspruch 10, **dadurch gekennzeichnet, dass** die geradlinigen Abschnitte (223) über einen Winkel von 360° verteilt sind.

**12.** Vorrichtung (600) nach Anspruch 10, **dadurch gekennzeichnet, dass** die geradlinigen Abschnitte (623) über einen Winkel zwischen 160° und 200° verteilt sind.

**13.** Vorrichtung (200; 600) nach einem der Ansprüche 9 bis 12, **dadurch gekennzeichnet, dass** die Auskopplungselemente (230) der verschiedenen geradlinigen Abschnitte (223; 623) entlang einer Reihe von konzentrischen Kreisen bzw. konzentrischen Zylindern verteilt sind, wobei jedem Kreis bzw. Zylinder ein Auskopplungselement (230) jedes dieser Abschnitte entspricht.

**14.** Vorrichtung (200; 600; 700) nach einem der Ansprüche 1 bis 13, **dadurch gekennzeichnet, dass** die Emissionswellenleiter (220; 720) Siliziumnitrid enthalten.

**15.** Verfahren zur Verwendung einer Emissionsvorrichtung (200; 600; 700) nach einem der Ansprüche 1 bis 14, wobei jeder optische Koppler (260; 660) einen Koppelring enthält und jedes Phasenverschiebungselement (222) einen Abschnitt eines Emissionswellenleiters, Phasenverschiebungsabschnitt genannt, enthält, wobei das Verfahren umfasst:

- einen Schritt des Einstellens des jeweiligen Kopplungsverhältnisses jedes der optischen Koppler (260; 660) durch Einstellen der Stärke einer elektrischen Spannung oder eines elektrischen Stroms, die bzw. der eine Erwärmung durch Joule-Effekt für den entsprechenden Koppelring bewirkt; und
- einen Schritt des Einstellens einer jeweiligen Phasenverschiebung, die von jedem der Phasenverschiebungselemente (222) bereitgestellt wird, die den optischen Kopplern zugeordnet sind, deren Kopplungsverhältnis einen vorbestimmten Schwellenwert überschreitet, durch Einstellen der Stärke einer elektrischen Spannung oder eines elektrischen Stroms, die bzw. der eine Erwärmung durch Joule-Effekt für den entsprechenden Phasenverschiebungsabschnitt bewirkt.

## Claims

**1.** A device (200; 600; 700) for emitting an electromagnetic wave front for being, in use, connected to a light source (10) emitting a light beam (11), and comprising:

- at least three emitting waveguides (220; 720), each including a rectilinear section (223; 623) which receives one or more element(s) for extracting optical power, called extracting element(s) (230); and
- upstream of each of said rectilinear sections, a respective phase shifting element (222);
**characterised in that**:
- the device further includes, upstream of each of said phase shifting elements, a respective optical coupler (260; 660), each optical coupler having an adjustable coupling rate; and
- at least two of said rectilinear sections (223; 623) extend along straight lines which are not parallel to each other.

**2.** The device (200; 600; 700) according to claim 1, **characterised in that** it further includes, an injecting waveguide (210; 610), along which the optical couplers (260; 660) are distributed, each optical coupler (260; 660) being located between the injecting waveguide (210; 610) and one of the phase shifting elements (222).

**3.** The device (200; 600; 700) according to claim 1 or 2, **characterised in that** each rectilinear section (223; 623) includes a plurality of extracting elements (230), distributed along said rectilinear section at a regular pitch.

**4.** The device (200; 600; 700) according to claim 3, **characterised in that** said regular pitch is the same, on each of said rectilinear sections (223; 623).

**5.** The device (200; 600; 700) according to any of claims 1 to 4, **characterised in that** each rectilinear section (223; 623) includes a plurality of extracting elements (230), having different extracting rates, and arranged along said section in ascending order of this extracting rate, from an inlet end (2231) of said section, on the side of the corresponding phase shifting element (222).

**6.** The device (200; 600; 700) according to any of claims 1 to 5, **characterised in that** each rectilinear section (223;

623) includes a plurality of extracting elements (230), and **in that** the extracting elements are distributed along a series of patterns, the different patterns being homotheties of each other, and to each pattern corresponding an extracting element (230) of each of said sections.

7. The device (200; 600; 700) according to any of claims 1 to 6, **characterised in that** each rectilinear section (223; 623) includes a plurality of extracting elements (230), **in that** each of said extracting elements is an extracting grating, and **in that** extracting gratings of a same rectilinear section are oriented along the same direction and have the same period.

8. The device (200; 600; 700) according to any of claims 1 to 7, **characterised in that** said rectilinear sections (223; 623) are all oriented towards a same zone, called a core zone (240; 740), located, for each rectilinear section (223; 623), on the side opposite to the corresponding phase shifting element (222).

9. The device (200; 600) according to claim 8, **characterised in that** said rectilinear sections (223; 623) are oriented along radiuses of a same circle (C) or of a same cylinder.

10. The device (200; 600) according to claim 9, **characterised in that** said rectilinear sections (223; 623) are arranged according to a regular angular distribution pitch ($\beta$).

11. The device (200) according to claim 10, **characterised in that** said rectilinear sections (223) are distributed over a 360° angle.

12. The device (600) according to claim 10, **characterised in that** said rectilinear sections (623) are distributed over an angle between 160° and 200°.

13. The device (200; 600) according to any of claims 9 to 12, **characterised in that** extracting elements (230) of the different rectilinear sections (223; 623) are distributed along a series of concentric circles or concentric cylinders, wherein to each circle or cylinder corresponds an extracting element (230) of each of said sections.

14. The device (200; 600; 700) according to any of claims 1 to 13, **characterised in that** the emitting waveguides (220; 720) comprise silicon nitride.

15. A method for using an emitting device (200; 600; 700) according to any of claims 1 to 14, wherein each optical coupler (260; 660) comprises a coupling ring and each phase shifting element (222) includes a section of an emitting waveguide, called a phase shifting section, the method including:

- a step for adjusting the respective coupling rate of each of the optical couplers (260; 660), by adjusting the intensity of an electric voltage or current, providing heating due to the Joule effect to the corresponding coupling ring; and
- a step for adjusting a respective phase shifting delivered by each of the phase shifting elements (222) associated with the optical couplers the coupling rate of which exceeds a predetermined threshold, by adjusting the intensity of an electric voltage or current providing heating due to the Joule effect to the corresponding phase shifting section.

FIG.1A

FIG.1B

FIG.2

FIG.3A

FIG.3B

FIG. 4A

FIG. 4B

FIG. 4C

FIG. 4D

FIG. 5A

FIG. 5B

FIG. 5C

FIG. 5D

EP 3 451 054 B1

FIG.6

FIG.7

FIG.8

20

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DAVID N. HUTCHISON.** High-resolution aliasing-free optical beam steering. *Optica,* Août 2016, vol. 3 (8), 887-890

- **JIE SUN.** Large-scale nanophotonic phased array. *Nature,* 10 Janvier 2013, vol. 493, 195-199